# EUROPEAN PATENT APPLICATION

(11) **EP 4 737 404 A1**
(43) Date of publication of application: **06.05.2026**
(21) Application number: 25209818.1
(22) Date of filing: 20.10.2025
(51) Int. Cl.: C03B 23/025, C03B 23/03, C03B 35/20, B65G 49/06, C03B 35/14

(54) **APPARATUS FOR BENDING GLASS SHEETS**

(30) Priority: 21.10.2024 FI 20246250
(71) Applicant: GlassAI Oy, 33900 Tampere (FI)
(72) Inventor: Sääksi, Jukka, 33900 Tampere (FI)
(74) Representative: Kolster Oy Ab

(57) **Abstract**

An apparatus for bending glass sheets. The apparatus comprises a set of mould trolleys for transporting female moulds and glass sheets to be bent in the apparatus. The apparatus further comprises a first glass bending line and a second glass bending line. A second end of the first glass bending line is arranged in connection with a first end of the second glass bending line and a second end of the second glass bending line is arranged in connection with a first end of the first glass bending line. The apparatus further comprises at least one return track from the second end of at least one of the glass bending lines to the first end of the corresponding glass bending line.

## Description

### FIELD OF THE INVENTION

The present invention relates to an apparatus for bending glass sheets.

### BACKGROUND OF THE INVENTION

Bent shapes of glass sheets, i.e., bent glass sheets, may be applied for example in construction industry or in automobile industry. In construction industry, the bent glass sheets with different curvatures may be applied to form in buildings rounded corners provided with windows. In automobile industry, the bent glass sheets are applied especially as windscreens or rear windows in automobiles.

The bent glass sheet is manufactured by setting a flat glass sheet on top of a female mould and applying a heating effect to the glass sheet. The heated glass sheet bends downwards due to the force of gravity acting on the heated glass sheet, whereby the heated glass sheet sags under its own weight so as to be bent following a profile of the female mould. When manufacturing windows with two layers, such as the windscreens in automobiles typically are, a set of two overlapping flat glass sheets are set on top of a female mould, whereby the glass sheets bend to each other in a compatible manner.

### BRIEF DESCRIPTION OF THE INVENTION

An object of the present invention is to provide a novel apparatus for bending glass sheets.

The invention is characterized by the features of the independent claim.

The invention is based on the idea of an apparatus comprising at least two glass bending lines, which glass bending lines are connected to each other in a way allowing varying usage situations of the apparatus.

An advantage of the invention is that the operation of the apparatus can be varied in a versatile manner based especially based on a required production quantity of bent glass sheets to be produced.

Some embodiments of the invention are disclosed in the dependent claims.

### BRIEF DESCRIPTION OF THE DRAWINGS

In the following the invention will be described in greater detail by means of preferred embodiments with reference to the accompanying drawings, in which
Figure 1 shows schematically a top view of an apparatus for bending glass sheets;
Figure 2 shows schematically a side view of a mould trolley carrying a female mould and a glass sheet on top of the female mould; and
Figure 3 shows schematically a partial side view of the apparatus of Figure 1 in cross-section.

For the sake of clarity, the figures show some embodiments of the invention in a simplified manner. Like reference numerals identify like elements in the figures.

### DETAILED DESCRIPTION OF THE INVENTION

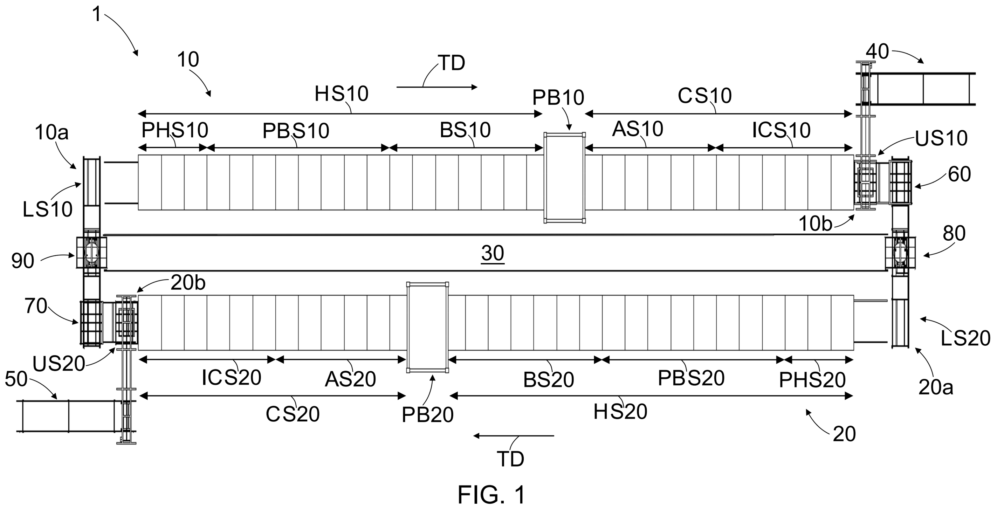

Figure 1 is a schematic top view of an apparatus 1 for bending glass sheets. The apparatus 1 comprises a first glass bending line 10 and a second glass bending line 20. The first glass bending line 10 and the second glass bending line 20 are arranged substantially parallel to each other.

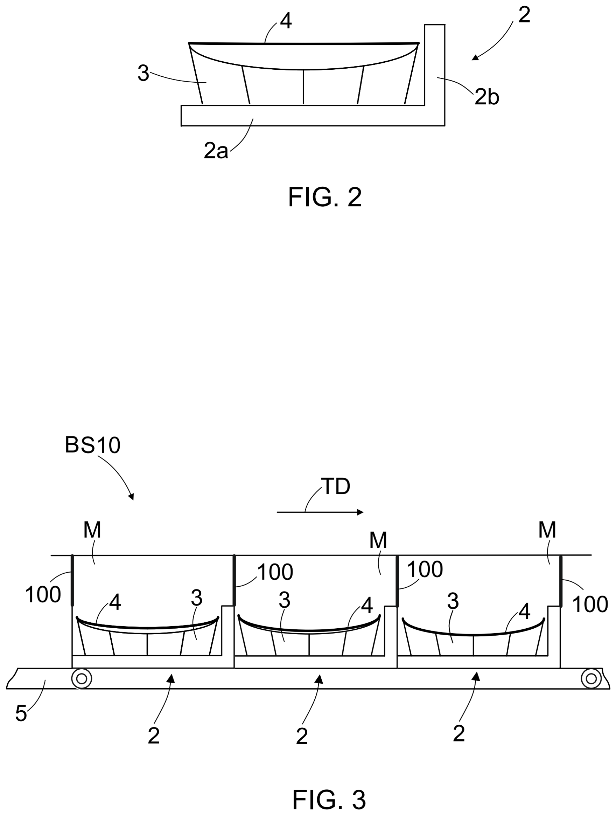

The apparatus 1 further comprises mould trolleys 2. Figure 2 is a schematic side view of a mould trolley 2 carrying a female mould 3 and at least one glass sheet 4 on top of the female mould 3. The mould trolley 2 is used to transport the at least one glass sheet 4 to be bent through the first glass bending line 10 and/or through the second glass bending line 20. In the glass bending line 10, 20 the at least one glass sheet 4 having originally a flat shape will achieve a bent shape following a profile of the female mould 3. The travel of the mould trolleys 2 through the glass bending lines 10, 20 is carried out by means of conveyors known per se to a person skilled in the art. Figure 3 shows schematically a conveyor 5.

The mould trolley 2 according to the example embodiment of Figure 2 comprises a substantially horizontal part 2a. The mould trolley 2 further comprises, at an end of the horizontal part 2a, a part 2b extending upwards from the horizontal part 2a. Typically the mould trolley 2 travels through the glass bending lines 10, 20 such that the upwards extending part 2b points forward in a direction of travel TD of the mould trolley 2 through the glass bending lines 10, 20.

The substantially horizontal part 2a of the mould trolley 2 is configured to receive the female mould 3. The female mould 3 comprises a circumferential edge on top of which the at least one glass sheet 4 to be bent is set. The female mould 3 comprises, in the area limited by the circumferential edge, a cavity, whose profile is designed to correspond to an intended shape of the at least one bent glass sheet 4. The at least one glass sheet 4 moving through heated sections in the glass bending line 10, 20 bends downwards due to the force of gravity acting on the at least one heated glass sheet 4, whereby the at least one heated glass sheet 4 sags under its own weight so as to be bent following the profile of the female mould 3.

When manufacturing windows with a single layer, such as glass panes for buildings, typically a single flat glass sheet 4 is set on top of the female mould 3, whereby the glass sheet 4 bends following the profile of the female mould 3. When manufacturing windows with two layers, such as the windscreens in automobiles typically are, a set of two overlapping flat glass sheets 4 are set on top of the female mould 3, whereby the glass sheets 4 bend to each other in a compatible manner, following the profile of the female mould 3. Therefore, a reference to a glass sheet 4 in singular may include in the description and claims also a reference to the set of at least two overlapping glass sheets 4, unless otherwise expressed.

The first glass bending line 10 comprises, at a first end 10a of the first glass bending line 10, a loading station LS10. The first glass bending line 10 further comprises, in the direction of travel TD of the mould trolleys 2 through the first glass bending line 10, that being respectively the direction of travel TD of the glass sheets 4 through the first glass bending line 10, a heating section HS10 and a cooling section CS10. At a second end 10b of the first glass bending line 10 there is an unloading station US10.

The configuration of the second glass bending line 20 is substantially similar to the configuration of the first glass bending line 10. That is, the second glass bending line 20 comprises, at a first end 20a of the second glass bending line 20, a loading station LS20. The second glass bending line 20 further comprises, in the direction of travel TD of the mould trolleys 2 through the second glass bending line 20, that being respectively the direction of travel TD of the glass sheets 4 through the second glass bending line 20, a heating section HS20 and a cooling section CS20. At a second end 20b of the second glass bending line 20 there is an unloading station US20.

At the loading station LS10, LS20 the glass sheets 4 to be bent are loaded into the mould trolleys 2. At the loading station LS10, LS20, the mould trolley 2 carries the female mould 3, and the at least one glass sheet 4 is set on top of the female mould 3. The loading of the glass sheets 4 into the mould trolleys 2 may be manual or automated.

At the heating section HS10, HS20, a heating effect is applied to the glass sheets 4 travelling through the heating section HS10, HS20. Applying the heating effect to the glass sheet 4 may include means and measures for heating the glass sheet 4 by heating the air in the heating section HS10, HS20, and/or means and measures for applying heat directly towards the glass sheet 4. At the heating section HS10, HS20, the heated glass sheets 4 bend downwards due to the force of gravity acting on the heated glass sheet 4, whereby the heated glass sheet 4 sags under its own weight so as to be bent following the profile of the female mould 3.

At the cooling section CS10, CS20, a cooling effect is applied to the bent glass sheets 4 travelling through the cooling section CS10, CS20. Applying the cooling effect to the glass sheet 4 may include means and measures for cooling the glass sheet 4 by cooling the air in the cooling section CS10, CS20, and/or means and measures for applying cooling directly towards the glass sheet 4. The cooling effect is applied to the bent glass sheets 4 for causing the bent glass sheets 4 to maintain their bent shape.

At the unloading station US10, US20 the bent glass sheets 4 are unloaded from the mould trolleys 2. In other words, at the unloading station US10, US20, the bent glass sheets 4 are removed from the female mould 3. The unloading of the bent glass sheets 4 from the mould trolleys 2 may be automated.

The example embodiment of the apparatus 1 according to Figure 1 further comprises between the heating section HS10 of the first glass bending line 10 and the cooling section CS10 of the first glass bending line 10 a press bending section PB10, and between the heating section HS20 of the second glass bending line 20 and the cooling section CS20 of the second glass bending line 20 a press bending section PB20. The press bending section PB10, PB20 comprises a male mould that can be pressed against the at least one glass sheet 4 set on top of the female mould 3. With this press bending it is possible to mechanically ensure the correct shape of the bent glass sheet 4. The glass bending lines 10, 20 may, however, be implemented without any press bending section PB10, PB20. In other words, at least one of the first glass bending line 10 and the second glass bending line 20 may be implemented without any press bending section.

In the apparatus 1 according to Figure 1, the unloading station US10 of the first glass bending line 10 is arranged in connection with the loading station LS20 of the second glass bending line 20, and the unloading station US20 of the second glass bending line 20 is arranged in connection with the loading station LS10 of the first glass bending line 10 for allowing the mould trolleys 2 to circulate both through the first glass bending line 10 and through the second glass bending line 20. The said connections between the unloading stations and the loading stations may be implemented with applicable conveyors and/or additional equipment. The additional equipment may include for example mould change stations and/or turning stations, which are discussed in more detail below.

In this configuration of the apparatus 1, the mould trolleys 2 are most of the time in inner spaces provided by the heating sections HS10, HS20 and the cooling sections CS10, CS20 of the first and the second glass bending lines 10, 20, except for the time needed to unload the bent glass sheet 4 from the mould trolley 2, to transfer the mould trolley 2 from the unloading station of one of the glass bending lines to the loading station of the other glass bending line and to load the glass sheet to be bent into the mould trolley 2. This has the effect that the mould trolleys 2 will not be for a long time under the effect of the temperature of the surroundings of the apparatus 1, what could cause the temperature of the mould trolley 2 to decrease. In other words, the disclosed circulation of the mould trolleys 2 between the first glass bending line 10 and the second glass bending line 20 helps to maintain the temperature of the mould trolley 2, or to prevent the temperature of the mould trolley 2 to decrease a lot. This has, in turn, the effect that in the heating sections HS10, HS20 of the first and second glass bending lines 10, 20 less heating power is needed to maintain the temperature conditions in the heating sections HS10, HS20 such that a designed heating effect can be directed to the glass sheets 4 to be bent.

The apparatus 1 of Figure 1 further comprises a return track 30. The return track 30 is arranged in a space between the first glass bending line 10 and the second glass bending line 20. The return track 30 is arranged to connect the unloading station of at least one of the glass bending lines to the loading station of the corresponding glass bending line for allowing the mould trolleys 2 to return directly from the unloading station of the at least one of the glass bending lines to the loading station of the corresponding glass bending line. In other words, the return track 30 in Figure 1 is arranged to connect the unloading station US10 of the first glass bending line 10 to the loading station LS10 of the first glass bending line 10 as well as the unloading station US20 of the second glass bending line 20 to the loading station LS20 of the second glass bending line 20. In this case, the mould trolley 2 having travelled through the first bending line 10 can be returned from the unloading station US10 of the first bending line 10 directly back to the loading station LS10 of the first glass bending line 10 via the return track 30 such that the mould trolley 2 will not travel through the second glass bending line 20. Similarly, the mould trolley 2 having travelled through the second bending line 20 can be returned from the unloading station US20 of the second bending line 20 directly back to the loading station LS20 of the second glass bending line 20 via the return track 30 such that the mould trolley 2 will not travel through the first glass bending line 10. The return track 30 can be implemented for example by a conveyor, which can optionally be operated in both directions.

The effect of the return track 30 is that a total shutdown of the apparatus 1 can be avoided during maintenance or repair operations that are carried out only in one of the glass bending lines. The return track 30 can also be used to return the mould trolley 2 back from the unloading station of the glass bending line to the loading station of the same glass bending time sooner or faster during times of lower production when one of the glass bending lines can be shut down.

The example embodiment of the apparatus 1 according to Figure 1 comprises only a single return track 30. However, both glass bending lines can be provided with a return track 30 dedicated to that glass bending line.

According to an embodiment of the apparatus 1, the apparatus 1 comprises a sidetrack connected to the unloading station of the glass bending line to receive the bent glass sheets unloaded from the mould trolleys at the unloading station of the glass bending line. According to this example embodiment of the apparatus 1, as shown also in Figure 1, the apparatus 1 comprises a first sidetrack 40, that is connected to the unloading station US10 of the first glass bending line 10. The first sidetrack 40 may be arranged to extend at least partly away from the first 10 and second 20 glass bending lines, as shown schematically in Figure 1. The first sidetrack 40 is intended to receive the bent glass sheets 4 that are unloaded from the mould trolleys 2 at the unloading station US10 of the first glass bending line 10.

The example embodiment of the apparatus 1 of Figure 1 comprises also a second sidetrack 50, that is connected to the unloading station US20 of the second glass bending line 20. The second sidetrack 50 may be arranged to extend at least partly away from the first 10 and second 20 glass bending lines, as shown schematically in Figure 1. The second sidetrack 50 is intended to receive the bent glass sheets 4 that are unloaded from the mould trolleys 2 at the unloading station US20 of the second glass bending line 20.

In the sidetracks 40, 50 the bent glass sheets 4 can cool down more before any further treatments are applied to the bent glass sheets 4. The sidetracks may be implemented with appropriate conveyors.

The apparatus 1 of Figure 1 is intended especially to the production of the bent glass sheets in large quantities. For that purpose, operating parameters of the first glass bending line 10 and of the second glass bending line 20 may be the same such that both glass bending lines are configured to produce bent glass sheets with a same bent shape and other characteristics.

Because the bent shape of the bent glass sheet 4 is determined by the profile of the female mould 3, a production of bent glass sheets with a different bent shape requires that female moulds 3 used in the production can be changed at times to female moulds 3 suitable to be used for manufacturing bent glass sheets 4 with another bent shape. For this purpose, the example embodiment of the apparatus 1, as shown also in Figure 1, comprises a first mould change station 60 that is located on the side of the second end 10b of the first glass bending line 10, in the direction of the travel TD of the mould trolley 2 after the unloading station US10 of the first bending line 10. The apparatus 1 comprises also a second mould change station 70 that is located on the side of the second end 20b of the second glass bending line 20, in the direction of the travel TD of the mould trolley 2 after the unloading station US20 of the second bending line 20. At the mould change station, the mould trolleys 2 can be provided with the female moulds 3 that are intended to be used next in the production of the bent glass sheets 4.

According to an embodiment, operations implemented in the unloading stations US10, US20 to unload the bent glass sheets 4 from the mould trolleys 2 may be integrated with the corresponding mould change stations 60, 70. In that case, the mould change stations 60, 70 form also the corresponding unloading stations US10, US20. Appropriate tracks for receiving the bent glass sheets 4 unloaded from the mould trolleys 2 will then be located close to the mould change stations 60, 70.

As discussed shortly above, the mould trolley 2 typically travels through the glass bending lines 10, 20 such that the upwards extending part 2b points forward in the direction of travel TD of the mould trolley 2 through the glass bending lines 10, 20. Therefore, a position of the mould trolley 2 arriving from the unloading station of the glass bending line to the loading station of the other glass bending line should probably be reversed before the mount trolley 2 entering into the other glass bending line. For this purpose, the example embodiment of the apparatus 1, as shown also in Figure 1, comprises a first turning station 80 between the unloading station US10 of the first glass bending line 10 and the loading station LS20 of the second glass bending line 20 for reversing the position of the mould trolley 2 arriving from the unloading station US10 of the first glass bending line 10 to the loading station LS20 of the second glass bending line 20. Furthermore, the example embodiment of the apparatus 1 shown in Figure 1 comprises also a second turning station 90 between the unloading station US20 of the second glass bending line 20 and the loading station LS10 of the first glass bending line 10 for reversing the position of the mould trolley 2 arriving from the unloading station US20 of the second glass bending line 20 to the loading station LS10 of the first glass bending line 10.

In the example embodiment of Figure 1 the turning stations 80, 90 are arranged at the ends of the return track 30, but other locations between the corresponding unloading and loading stations are applicable as well.

The example embodiment of Figure 1 comprises the turning stations 80, 90 that are separate from the other stations in the apparatus. Alternatively, the function of the turning stations 80, 90 can also be integrated with the unloading station US10, US20, with the mould change station 60, 70, or with the loading station LS10, LS20.

In the example embodiment of the apparatus 1 of Figure 1, the heating section HS10, HS20 comprises a pre-heat section PHS10, PHS20, a pre-bending section PBS10, PBS20 following the pre-heat section PHS10, PHS20, and a bending section BS10, PB20 following the pre-bending section PBS10, PBS20.

In the pre-heat section PHS10, PHS20, a heating effect is applied to the glass sheet 4 laying on top of the female mould 3. The intention in the pre-heat section PHS10, PHS20 is to warm up the glass sheet 4.

In the pre-bending section PBS10, PBS20 the heating of the glass sheet 4 is continued. In the pre-bending section PBS10, PBS20 the glass sheet 4 heats up more and may start to bend downwards due to the force of gravity acting on the heated glass sheet 4, whereby the heated glass sheet 4 sags under its own weight.

In the bending section BS10, BS20 even more heating effect is applied to the glass sheet 4. In the bending section BS10, BS20 the glass sheet 4 heats up more and bends downwards more due to the force of gravity acting on the heated glass sheet, whereby the heated glass sheet sags under its own weight so as to be bent following the profile of the female mould 3.

Different devices that may be used to apply the heating effect to the glass sheet 4 in the heating section HS10, HS20 are known per se to a person skilled in the art.

In the example embodiment of the apparatus 1 of Figure 1, the cooling section CS10, CS20 comprises an annealing section AS10, AS20, and an intensive cooling section ICS10, ICS20 following the annealing section AS10, AS20.

In the annealing section AS10, AS20, a minor cooling effect is applied to the bent glass sheet 4. The intention in the annealing section AS10, AS20 is to create in the bent glass sheet 4 an internal state of tension that contributes to maintain the bent shape of the glass sheet 4.

In the intensive cooling section ICS10, ICS20, more powerful cooling effect is applied to the glass sheet 4 for causing the bent glass sheet 4 to maintain its bent shape, and for reducing the temperature of the glass sheet 4 for further treatments.

Different devices that may be used to apply the cooling effect to the glass sheet 4 in the cooling section CS10, CS20 are known per se to a person skilled in the art.

According to an example embodiment of the apparatus 1, at least one of the heating section HS10, HS20 and the cooling section CS10, CS20 is of a modular structure. In other words, the heating section HS10, HS20 and/or the cooling section CS10, CS20 can be implemented as a modular structure. The heating section HS10, HS20 and/or the cooling section CS10, CS20 comprises successive modules having an open interior such that the successive modules form an open tunnel-shaped interior volume in the heating section HS10, HS20 and/or in the cooling section CS10, CS20.

Figure 3 shows schematically a partial side view of the apparatus 1 of Figure 1 in cross-section in the bending section BS10 of the first glass bending line 10. Similar modular structure may as well be used in the heating section BS20 of the second glass bending line 10, and in the pre-heating sections PHS10, PHS20, in the pre-bending sections PBS10, PBS20, in the annealing sections AS10, AS20 and in the intensive cooling sections ICS10, ICS20 both in the first glass bending line 10 and in the second glass bending line 20.

Figure 3 shows schematically three successive modules M in the direction of the travel TD of the mould trolleys 2 travelling through the bending section BS10 in the first glass bending line 10. Figure 3 shows schematically, in each module M, the mould trolley 2 carrying the female mould 3 and the glass sheet 4 on top of the female mould 3.

At an interface between the successive modules M there is a sealing element 100. The sealing element 100 extends into the tunnel-shaped interior volume of the bending section BS10. The sealing element 100 partially separates the module M from the at least one adjacent module M. The sealing element 100 prevents, at the interface between the adjacent modules M, air leaks away from the bending section BS10. The sealing element 100 also reduces air flows between the adjacent modules M. If the sealing element 100 is made of heat-insulating material, the sealing element 100 can for its part also prevent heat transfer between the adjacent modules M. The sealing elements 100 thus stabilize the temperature conditions in the modules M.

The module M together with the at least one associated sealing element 100 limit an inner volume, i.e. a compartment, of the module M such that the inner volume of the module M is partially separated from the inner volume, i.e., the compartment, of the adjacent module M by the sealing element 100.

According to an example embodiment of the apparatus 1, as shown in Figure 3, the mould trolleys 2 are configured to form together with the sealing elements 100 closed compartments at the modules M. In the example embodiment shown in Figure 3, the upwards extending part 2b of the mould trolley 2 is configured to form together with the sealing element 100 a closed compartment at the module M, when a set of consecutive mould trolleys 2 travel through the bending section BS10 such that the mould trolleys 2 are substantially attached to each other. Thus, a dimension of the M modules and a dimension of the mould trolleys 2 are configured to be substantially the same in the direction of the travel TD of the mould trolley 2.

The closed compartments at the modules M can provide at the heating sections HS10, HS20 and the cooling sections CS10, CS20 individual conditions for heating or cooling the glass sheet 4 in the respective module M.

It will be obvious to a person skilled in the art that, as the technology advances, the inventive concept can be implemented in various ways. The invention and its embodiments are not limited to the examples described above but may vary within the scope of the claims.

## Claims

1. An apparatus for bending glass sheets, the apparatus comprising
a set of mould trolleys for transporting female moulds and glass sheets to be bent in the apparatus,
a first glass bending line and a second glass bending line, wherein a second end of the first glass bending line is arranged in connection with a first end of the second glass bending line and a second end of the second glass bending line is arranged in connection with a first end of the first glass bending line for allowing the mould trolleys to circulate both through the first glass bending line and through the second glass bending line, and
at least one return track for connecting the second end of at least one of the glass bending lines with the first end of the corresponding glass bending line for allowing the mould trolleys to return directly from the second end of the at least one of the glass bending lines to the first end of the corresponding glass bending line.

2. An apparatus as claimed in claim 1, **characterized in that** the first glass bending line comprises at the first end a loading station for loading a mould trolley with at last one glass sheet to be bent and at the second end an unloading station for unloading the at least one bent glass sheet from the mould trolley,
the second glass bending line comprises at the first end a loading station for loading a mould trolley with at least one glass sheet to be bent and at the second end an unloading station for unloading the at least one bent glass sheet from the mould trolley,
the unloading station of the first glass bending line is arranged in connection with the loading station of the second glass bending line and the unloading station of the second glass bending line is arranged in connection with the loading station of the first glass bending line for allowing the mould trolleys to circulate both through the first glass bending line and through the second glass bending line, and that
the at least one return track is arranged to connect the unloading station of at least one of the glass bending lines to the loading station of the corresponding glass bending line for allowing the mould trolleys to return directly from the unloading station of the at least one of the glass bending lines to the loading station of the corresponding glass bending line.

3. An apparatus as claimed in claim 1 or 2, **characterized in that** the apparatus comprises a single return track for connecting both the second end of the first glass bending line with the first end of the first glass bending line and the second end of the second glass bending line with the first end of the second glass bending line.

4. An apparatus as claimed in claim 3, **characterized in that** the single return track is arranged in a space between the first glass bending line and the second glass bending line.

5. An apparatus as claimed in any one of the preceding claims, **characterized in that** the apparatus comprises a turning station to reverse the position of the mould trolley arriving from the unloading station of the glass bending line to the loading station of the other glass bending line.

6. An apparatus as claimed in claim 5, **characterized in that** the turning station is arranged between the unloading station of the glass bending line and the loading station of the other glass bending line.

7. An apparatus as claimed in any one of the preceding claims, **characterized in that** the apparatus comprises a sidetrack connected to the unloading station of the glass bending line to receive the at least one bent glass sheet unloaded from the mould trolley at the unloading station of the glass bending line.

8. An apparatus as claimed in any one of the preceding claims, **characterized in that** the apparatus comprises at least one mould change station for providing the mould trolley with the female moulds to be used next in the glass bending line.

9. An apparatus as claimed in any one of the preceding claims, **characterized in that** the glass bending line comprises a heating section and a cooling section following the heating section.

10. An apparatus as claimed in claim 9, **characterized in that** the heating section comprises a preheating section, a pre-bending section and a bending section.

11. An apparatus as claimed in claim 9 or 10, **characterized in that** the cooling section comprises an annealing section and an intensive cooling section.

12. An apparatus as claimed in any one of preceding claims 9 to 11, **characterized in that** the apparatus comprises a press bending section between the heating section and the cooling section.

13. An apparatus as claimed in any one of preceding claims 9 to 12, **characterized in that** the at least one of the heating section and the cooling section is of a modular structure comprising successive modules with a sealing element at an interface between the successive modules to form successive partially separated compartments at the modules.

14. An apparatus as claimed in claim 13, **characterized in that** the mould trolleys are configured to form together with the sealing elements closed compartments at the modules.

15. An apparatus as claimed in claim 13 or 14, **characterized in that** the mould trolley comprises a substantially horizontal part for receiving the female mould to be provided with at least one glass sheet to be bent on top of the female mould, and an upwards extending part for forming together with the sealing element a closed compartment at the module.
